# DEMANDE DE BREVET EUROPEEN

(11) **EP 1 260 272 A1**
(43) Date de publication de la demande: **27.11.2002**
(21) Numéro de dépôt: 02291221.6
(22) Date de dépôt: 17.05.2002
(51) Int. Cl.: B02C 13/30

(54) **Dispositif de broyage, notamment de broyage de pierres**

(30) Priorité: 21.05.2001 FR 0106637
(71) Demandeur: Kirpy, 47390 Layrac (FR)
(72) Inventeur: Lenoir, François, 33200 Bordeaux (FR); Alloend-Bessand, Joel, 47390 Layrac (FR)
(74) Mandataire: Laget, Jean-Loup

(57) **Abrégé**

Un dispositif de broyage de pierres comporte un rotor (16) équipé de marteaux (20) fixés en périphérie du rotor (16). Le rotor (16) est entraîné en rotation par des moyens d'entraînement (3, 12, 13a, 13b) montés sur un support (4) coulissant déplacé par des moyens (5, 6,) élastiques dans le sens correspondant à une tension de courroie (2) et une transmission de puissance sensiblement constantes.

## Description

L'invention est relative à un dispositif de broyage, notamment de broyage de pierres, du genre comportant un rotor équipé de marteaux fixés en périphérie du rotor.

Le document FR 2.672.515 décrit une machine destinée à casser des pierres afin de réduire leur granulométrie, généralement nommé broyeur de pierres. Cette machine peut être utilisée dans le domaine de l'agriculture pour la préparation de terrains contenant trop de grosses pierres pour être cultivables, et également dans le domaine des travaux publics, des travaux de broyage en montagne pour le traçage et l'élaboration de pistes de ski, de travaux forestiers pour la création et la réfection de chemins forestiers et coupe-feu, ainsi que pour le broyage de produits d'excavation pour les lits de pose de pipe-line et leur recouvrement.

La machine du document FR 2.672.515 comporte un rotor entraîné en rotation autour d'un axe de rotation et constitué de flasques perpendiculaires audit axe de rotation. Les marteaux sont montés de manière démontable sur des axes disposés parallèlement à l'axe de rotation dans des ouvertures desdits flasques. Chaque marteau est maintenu fixe par rapport audit rotor par un moyen d'arrêt en rotation. Une enclume est disposée à faible distance du rotor et peut être réglée en position, afin que l'utilisateur puisse adapter la granulométrie des pierres après le passage du broyeur en modifiant la position de l'enclume. Le réglage de la position de l'enclume est réalisé par des moyens de longueur variable, par exemple des vérins hydrauliques.

La machine du document FR 2.672.515 donne satisfaction, mais présente un coût de fabrication et de montage relativement important, et nécessite une intervention en atelier pour remplacer les marteaux usés.

L'invention a pour but de remédier aux inconvénients de la technique connue, en proposant une transmission de puissance sensiblement constante, ainsi qu'un coût de fabrication et de maintenance réduits.

L'invention a pour objet un dispositif de broyage, notamment de broyage de pierres, du genre comportant un rotor équipé de marteaux fixés en périphérie du rotor, ledit rotor étant entraîné en rotation par des moyens d'entraînement comportant au moins une poulie coopérant avec au moins une courroie d'entraînement de poulie solidaire du rotor, caractérisé par le fait que les moyens d'entraînement sont montés sur un support coulissant déplacé par des moyens élastiques dans le sens correspondant à une tension de courroie et une transmission de puissance sensiblement constantes.

Selon d'autres caractéristiques avantageuses de l'invention :
- les moyens élastiques sont des moyens de traction à constante d'effort tirant ou poussant ledit support coulissant vers l'avant du châssis du dispositif,
- les moyens élastiques comprennent des ressorts de traction travaillant en allongement,
- le dispositif comporte une plaque de déflexion et de renvoi des particules grossières vers le rotor de broyage, tout en permettant aux particules broyées finement de se déposer en surface du lit de broyage,
- les moyens d'entraînement comportent un renvoi d'angle à deux sorties reliées chacune à des poulies d'entraînement de poulies d'extrémité du rotor de broyage, de manière à entraîner le rotor de broyage de manière équilibrée et symétrique,
- le rotor de broyage comporte des traverses présentant au moins une conformation en canal,
- chaque conformation en canal présente une section rectangulaire,
- chaque conformation en canal est adaptée pour recevoir une pièce présentant un plan incliné et une plaque d'amortissement,
- chaque conformation en canal est adaptée pour une pièce de fixation de marteau en forme de coin,
- chaque conformation en canal reçoit un montage mécanique autobloquant,
- le montage mécanique autobloquant comporte deux pièces formant un angle divergent orienté radialement intérieurement.

L'invention sera mieux comprise grâce à la description qui va suivre donnée à titre d'exemple non limitatif en référence aux dessins annexés dans lesquels :
- La figure 1 représente schématiquement une vue partielle en élévation d'un dispositif de broyage selon l'invention.
- La figure 2 représente schématiquement une vue en perspective avec enlèvement des pièces de carénage d'un dispositif de broyage selon l'invention.
- La figure 3 représente schématiquement une vue en élévation avec section partielle par un plan vertical d'un autre dispositif de broyage selon l'invention.
- La figure 4 représente schématiquement une vue en perspective d'un rotor de broyage selon l'invention équipé de marteaux de broyage.
- La figure 5 représente schématiquement une vue en coupe par un plan vertical d'un montage d'un marteau sur un rotor.
- La figure 6 représente schématiquement une vue en perspective éclatée d'un montage de marteau sur un rotor.

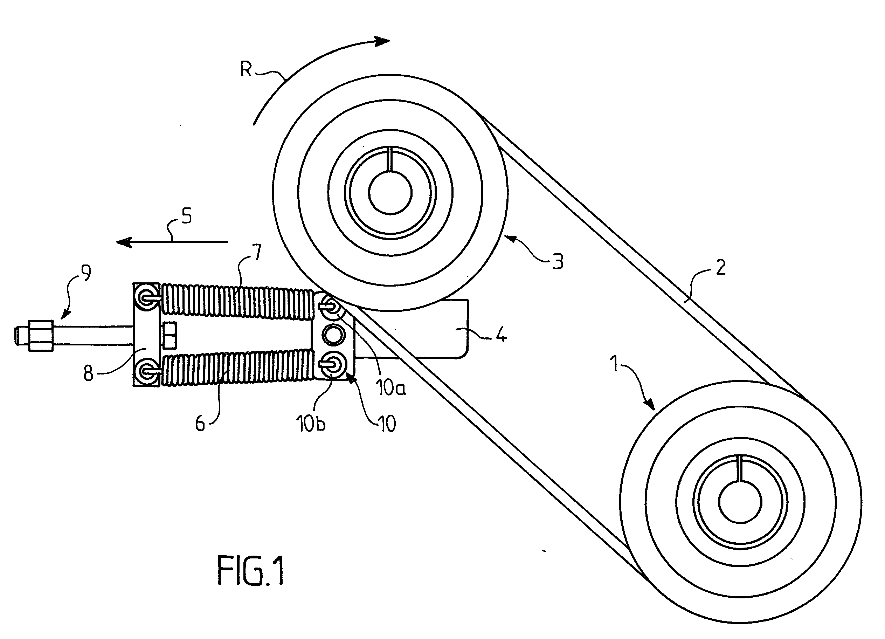

En référence aux figures 1 à 6, les éléments identiques ou fonctionnellement équivalents sont représentés par des chiffres de référence identiques.

Sur la figure 1, un mécanisme d'entraînement de dispositif de broyage selon l'invention comporte une poulie 1 d'entraînement solidaire du rotor de broyage non représenté, une courroie 2 de transmission et une poulie primaire 3 reliée à un renvoi d'angle non représenté animé par la prise de force d'un tracteur agricole ou analogue.

La poulie primaire 3 est montée sur un palier solidaire d'un support 4 coulissant. Le support 4 coulissant est déplacé par des moyens élastiques dans le sens de la flèche 5, de manière à tendre la courroie et à transmettre une puissance d'entraînement sensiblement constante de la poulie primaire 3 à la poulie 1 de rotor.

Dans l'exemple représenté, les moyens élastiques sont des moyens de traction à constante d'effort pour tirer le support coulissant 4 vers l'avant du dispositif, dans le sens de la flèche 5.

L'invention n'est pas limitée à cette variante de réalisation, mais s'étend également à toute variante comportant des moyens élastiques poussant le support coulissant vers l'avant du dispositif dans le sens de la flèche 5.

Dans l'exemple représenté, les moyens élastiques comprennent des ressorts 6 et 7 de traction montés sur un palonnier 8 destiné à être sollicité vers l'avant par une vis 9 de réglage de traction. Lorsque le dispositif est monté, les spires des ressorts 6 et 7 sont décollées, de manière à précontraindre les ressorts 6 et 7 de traction travaillant en allongement.

Les extrémités des ressorts 6 et 7 opposées au palonnier 8 sont accrochées à des oeillets espacés 10a, 10b pratiqués dans une pièce 10 solidaire du support coulissant 4.

Ainsi, grâce à l'invention, la poulie primaire 3 est constamment sollicitée vers l'avant de manière à tendre la courroie selon une tension prédéterminée par le réglage des précontraintes des ressorts 6 et 7 : cette disposition assurant une tension constante de courroie permet une transmission de puissance sensiblement constante entre la poulie primaire 3 et la poulie de rotor 1 tournant dans le sens de la flèche R.

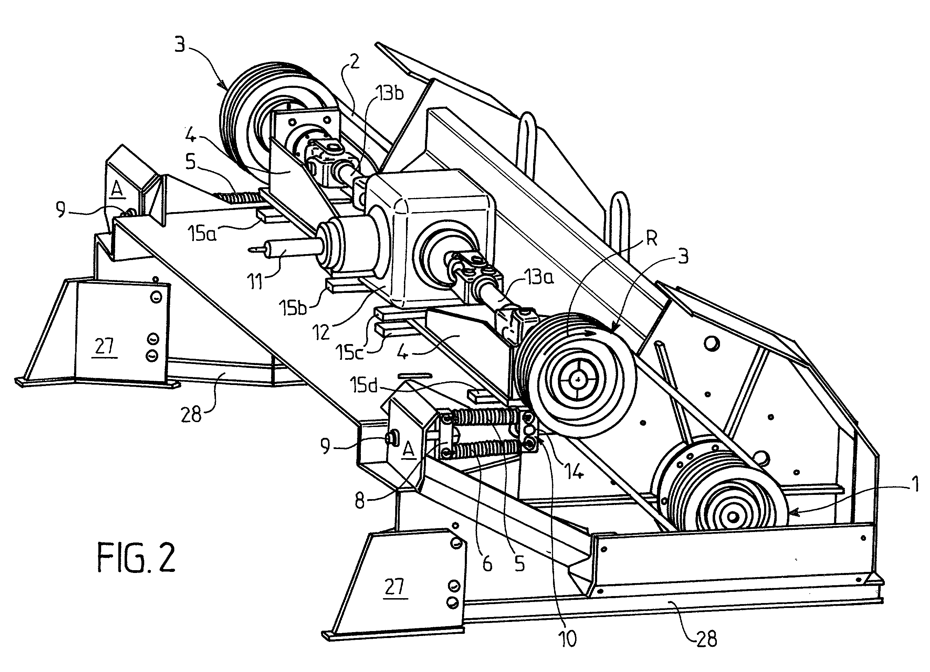

Sur la figure 2, un dispositif de broyage selon l'invention comporte un arbre à cardans 11 animant un renvoi d'angle 12 à deux sorties reliées chacune à un arbre à cardans 13a, 13b. Chaque arbre à cardans 13a, 13b entraîne une poulie 3 d'extrémité à gorges multiples. Chaque poulie primaire 3 entraîne une pluralité de courroies 2 dont une seule est représentée par souci de clarté. Les courroies 2 sous tension entraînent à leur tour des poulies d'extrémité 1 à gorges multiples d'entraînement du rotor de broyage.

Cette disposition de poulies 1 placées à chaque extrémité du rotor de broyage assure un entraînement équilibré du rotor de broyage, qui leur est coaxial.

Selon l'invention, l'ensemble des moyens d'entraînement 12, 13a, 13b et 3 est monté sur un support coulissant 4. Le support coulissant 4 est tiré vers l'avant par des moyens élastiques dans le sens correspondant à une tension des courroies 2.

Ces moyens élastiques comprennent les ressorts 5 et 6 travaillant en allongement accrochés d'une part au palonnier 8 dont la position est réglée par la vis 9 et d'autre part à la pièce 10 elle-même fixée par un axe 14 sur un retour du berceau coulissant 4.

Le berceau coulissant 4 coulisse de préférence sur des patins 15a, 15b, 15c, 15d de guidage et de coulissement. Les patins 15a à 15d sont de préférence des profilés de section sensiblement rectangulaire, et la surface inférieure du berceau 4 coulissant est de préférence pourvue de nervures de guidage coopérant avec des faces verticales des profilés 15 a à 15d.

Le châssis mécano-soudé du dispositif de broyage selon l'invention comporte des pattes avant A percées chacune d'un orifice de passage pour une vis de traction 9.

Les vis de traction 9 disposées de part et d'autre du support coulissant 4 agissent chacune sur un palonnier 8 de mise en traction de deux ressorts 5 et 6, en fournissant ainsi un montage équilibré de coulissement et de tirage vers l'avant du berceau 4 supportant les moyens d'entraînement 3, 13a, 13b et 12.

Le coulissement vers l'avant du berceau 4 est rendu possible par le fait que l'arbre à cardans 11 est un arbre télescopique cannelé, reliant le tracteur destiné à porter le dispositif de broyage selon l'invention par l'intermédiaire d'un attelage trois points non représenté, et le châssis du dispositif selon l'invention portant les patins de coulissement 15 a à 15d.

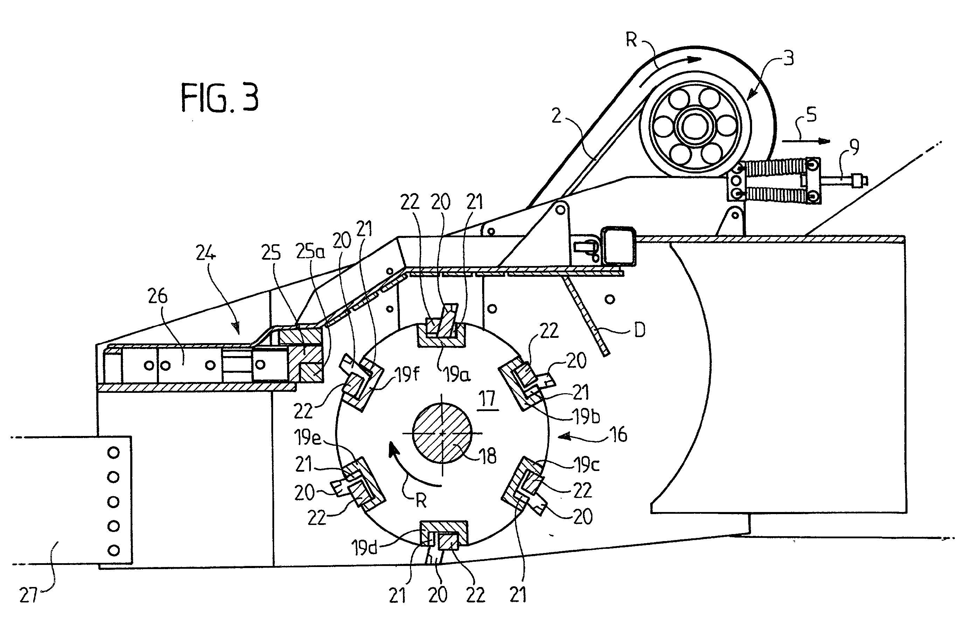

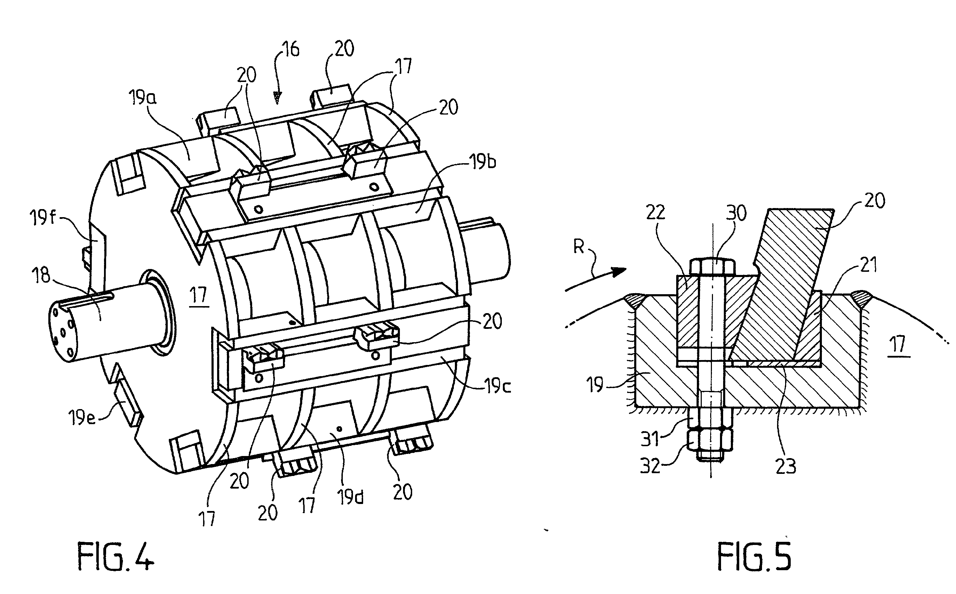

Sur les figures 3 et 4, un dispositif selon l'invention comporte un rotor 16 mécano-soudé comportant des flasques 17 en forme de disques assemblés à un arbre central 18 et reliés en périphérie par des barres transversales 19a à 19f.

Chaque barre 19a à 19f présente au moins un évidement en forme de canal à section rectangulaire adapté à la fixation des marteaux 20 de broyage.

Chaque marteau 20 de broyage est monté contre une rampe inclinée 21 à l'aide d'une bride 22 en forme de coin, de manière à appliquer chaque marteau contre une plaque 23 d'amortissement en acier à ressort.

Cette fixation assure une solidarisation latérale et radiale des marteaux 20, de manière à résister aux efforts centrifuges lors de la rotation du rotor 16 et aux chocs, notamment aux chocs de broyage.

Une enclume 24 constituée par une poutre 25 munie d'un bord d'usure 25a remplaçable est déplaçable sous l'action de deux vérins hydrauliques 26 disposés symétriquement par rapport au plan médian vertical du dispositif.

L'enclume 24 coopère avec les marteaux 20 pour broyer les pierres à la granulométrie requise. Le réglage de la granulométrie désirée est obtenu par le déplacement de l'enclume 24 à l'aide d'une commande hydraulique actionnable directement depuis le tracteur auquel le dispositif est destiné.

Le dispositif comporte une plaque D de déflexion et de renvoi des particules grossières vers le rotor 16 de broyage, tout en permettant aux particules broyées finement de se déposer en surface du lit de broyage.

Il est essentiel pour la constitution de lits de pose de pipelines, gazoducs, et autres canalisations souterraines sensibles de prévoir un lit de broyage dans lequel les particules entourant la canalisation, pipeline ou gazoduc présente une granulométrie inférieure à 15 mm, et de préférence comprise entre 0 et 10 mm, pour éviter toute éraflure et marquage susceptibles de présenter un risque à long terme pour l'intégrité de la canalisation, pipeline ou gazoduc. Grâce à la plaque de déflexion D du dispositif selon l'invention, les particules grossières de granulométrie supérieure à une dimension prédéterminée sont projetées directement au fond du lit de broyage, tandis que les particules plus fines de taille inférieure à une dimension prédéterminée sont projetées selon un parcours sensiblement tangent à l'extrémité de la plaque de déflexion en partie supérieure du lit de broyage. Cette disposition permet d'utiliser un dispositif selon l'invention dans toutes applications non seulement les applications agricoles ou travaux publics, préparation de surfaces à l'engazonnement mais également les applications d'enfouissage de canalisations de transport de fluide, ou des canalisations de protection de lignes de télécommunication.

Des sabots 27 et des patins 28 amovibles sont avantageusement prévus pour le déplacement du dispositif par rapport au sol, ces pièces d'usure étant réalisées de préférence en acier résistant à l'abrasion.

Un volet d'expansion à actionnement hydraulique par déplacement d'un vérin approprié est prévu pour ajuster la section de sortie des produits broyés et éviter toute projection indésirable à l'arrière du dispositif de broyage.

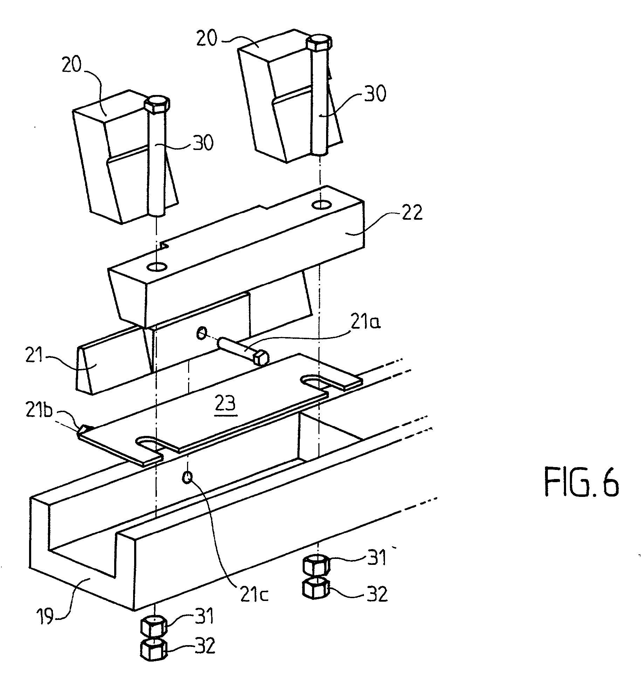

En référence aux figures 5 et 6, une barre transversale 19 de dispositif selon l'invention en forme de canal à section rectangulaire est représentée pour illustrer la fixation des marteaux 20 sur le rotor. On monte tout d'abord la rampe inclinée 21 sur un bord du canal 19 à l'aide d'une vis 21a et d'un écrou 21b. A cet effet, on prévoit un perçage 21c dans le bord du canal 19.

Cette fixation maintient la plaque d'amortissement 23 au fond du canal 19 et applique la partie verticale de la rampe 21 contre le bord du canal.

La rampe 21 est dans cet exemple une rampe double comportant une partie médiane verticale, de manière à fournir une surface d'appui latérale et une surface d'appui radiale lors du mouvement du rotor.

On positionne ensuite la bride 22 en forme de double coin avec les deux marteaux 20 et on serre le montage ainsi réalisé à l'aide des vis traversantes 30 munies des écrous doubles 31, 32, de manière à éviter tout desserrage.

La bride 22 montée applique sa partie en coin sur un bord oblique du marteau 20 présentant une inclinaison supérieure au bord opposé appliqué sur le plan incliné de la rampe 21.

Cette disposition assure ainsi la descente radiale du marteau 20 au contact de la plaque 23 pour produire une précontrainte élastique s'opposant au desserrement de l'écrou 30.

La plaque 23 d'acier à ressort assure ainsi la double fonction d'amortissement des vibrations radiales et des chocs subis par le marteau 20 et d'action élastique à la manière d'une rondelle ressort pour empêcher le desserrage des vis 30.

Le montage ainsi réalisé peut être utilisé pour des dispositifs de broyage à quatre rangées de marteaux, à un nombre plus faible de rangées de marteaux, par exemple deux ou trois rangées ou à un nombre plus élevé, six, huit rangées de marteaux, voire un nombre supérieur. L'invention s'étend ainsi à un nombre quelconque de rangées de marteaux permettant d'obtenir un rotor de broyage équilibré en rotation, sans pour autant constituer une limitation au processus de broyage réalisé grâce à l'invention.

La fixation ainsi réalisée assure une solidarisation complète des marteaux 20 avec le rotor, quelle que soit la vitesse de rotation du rotor. En raison de l'effet de coin bloquant tout l'ensemble, le remplacement des marteaux peut s'effectuer directement sur chantier après dévissage des vis 30 de fixation et application d'un choc avec un outil à inertie pour éliminer l'effet de coin bloquant le montage. Après élimination de cet effet de coincement, les pièces constitutives 21 à 23 s'enlèvent facilement sans l'utilisation d'autres outils.

Grâce à l'invention, les dispositifs de broyage permettent un broyage extrêmement fin pour tout type de broyage, en particulier pour des broyages de produits d'excavation pour des lits de pose de canalisations, pour la pose de pipelines, de gazoducs, de conduites électriques souterraines, de conduites de télécommunications contenant par exemple des fibres optiques.

L'effort appliqué par les marteaux lors du broyage et la puissance transmise par les poulies primaires 3 aux poulies 1 d'extrémité du rotor 16 reste constants, ce qui fournit une qualité constante de broyage pour toutes les applications envisagées.

La disposition d'une plaque de déflexion D décrite précédemment permet d'utiliser un dispositif selon l'invention dans toutes applications non seulement les applications agricoles ou travaux publics, mais également les applications d'enfouissage de canalisations de transport de fluide, ou des canalisations de protection de lignes de télécommunication

L'invention décrite en référence à des modes de réalisation particuliers n'y est nullement limitée, mais couvre au contraire toute modification de forme et toute variante de réalisation dans le cadre et l'esprit de l'invention.

## Revendications

1. Dispositif de broyage, notamment de broyage de pierres, du genre comportant un rotor (16) équipé de marteaux (20) fixés en périphérie du rotor (16), ledit rotor (16) étant entraîné en rotation par des moyens d'entraînement (3, 12, 13a, 13b) comportant au moins une poulie (3) coopérant avec au moins une courroie (2) d'entraînement de poulie (1) solidaire du rotor (16), **caractérisé par le fait que** les moyens d'entraînement (3, 12, 13a, 13b) sont montés sur un support coulissant (4) déplacé par des moyens élastiques (5, 6) dans le sens correspondant à une tension de courroie (2) et une transmission de puissance sensiblement constantes.

2. Dispositif selon la revendication 1, **caractérisé par le fait que** les moyens élastiques sont des moyens de traction à constante d'effort tirant ou poussant ledit support coulissant vers l'avant du châssis du dispositif.

3. Dispositif selon la revendication 1 ou la revendication 2, **caractérisé par le fait que** les moyens élastiques comprennent des ressorts (5, 6) de traction travaillant en allongement.

4. Dispositif selon l'une quelconque des revendications précédentes, **caractérisé par le fait que** les moyens d'entraînement comportent un renvoi d'angle (12) à deux sorties reliées (13a, 13b) chacune à des poulies (3) d'entraînement de poulies (1) d'extrémité du rotor (16) de broyage, de manière à entraîner le rotor (16) de broyage de manière équilibrée et symétrique.

5. Dispositif selon l'une quelconque des revendications précédentes, **caractérisé par le fait que** le rotor (16) de broyage comporte des traverses (19) présentant au moins une conformation en canal.

6. Dispositif selon la revendication 5, **caractérisé par le fait que** chaque conformation en canal présente une section rectangulaire.

7. Dispositif selon la revendication 5 ou la revendication 6, **caractérisé par le fait que** chaque conformation en canal est adaptée pour recevoir une pièce (21) présentant un plan incliné et une plaque (23) élastique d'amortissement.

8. Dispositif selon la revendication 5 ou la revendication 6, **caractérisé par le fait que** chaque conformation en canal est adaptée pour une pièce (2) de fixation de marteau en forme de coin.

9. Dispositif selon l'une quelconque des revendications 5 à 8, **caractérisé par le fait que** chaque conformation en canal reçoit un montage mécanique autobloquant.

10. Dispositif selon la revendication 9, **caractérisé par le fait que** le montage mécanique autobloquant comporte deux pièces (21, 22) formant un angle divergent orienté radialement intérieurement.

11. Dispositif selon l'une quelconque des revendications précédentes, **caractérisé par le fait que** le dispositif comporte une plaque (D) de déflexion et de renvoi des particules grossières vers le rotor de broyage, tout en permettant aux particules broyées finement de se déposer en surface du lit de broyage.
